# FASCICULE DE BREVET EUROPEEN

(11) **EP 1 977 934 B1**
(45) Date de publication et mention de la délivrance du brevet: **06.05.2009**
(21) Numéro de dépôt: 08290332.9
(22) Date de dépôt: 04.04.2008
(51) Int. Cl.: B60R 19/16, B60R 19/02

(54) **Butoir pour la protection d'un premier élément lors de la rencontre avec un deuxième élément**
Puffer zum Schutz eines Elements beim Zusammentreffen mit einem anderen Element
Stopper for protecting a first element when it meets a second element

(30) Priorité: 05.04.2007 FR 0702479
(43) Date de publication de la demande: 08.10.2008
(73) Titulaire: Reus, Pierre, 85200 Fontenay-le-Compte (FR)
(72) Inventeur: Reus, Pierre, 85200 Fontenay-le-Compte (FR)
(74) Mandataire: Laget, Jean-Loup

(56) Documents cités:
- EP-A- 1 369 307
- FR-A- 1 038 120
- FR-A- 2 804 644
- FR-A- 2 812 254
- FR-A- 2 860 760

## Description

La présente invention concerne un butoir pour la protection d'un premier élément, tel qu'un véhicule, lors de sa rencontre avec un deuxième élément, tel qu'un quai, avec lequel ledit premier élément est animé d'un déplacement relatif.

A l'heure actuelle, les véhicules, du type camion, sont généralement équipés sur la traverse horizontale arrière de la plate-forme et/ou en bout de châssis de butoirs rotatifs qui amortissent les chocs lors de l'accostage du camion à quai en vue de son chargement ou de son déchargement.

Un premier document brevet EP 0 648 644 A1, décrit un butoir formé d'un support et d'un rouleau tampon rotatif, ce rouleau tampon étant réalisé en matériau amortisseur. Le support est formé d'une platine, portant deux paliers d'extrémité, ladite platine étant fixée par exemple sur la traverse arrière de la plate-forme d'un camion. Les deux paliers d'extrémité portent et guident en rotation l'axe porteur horizontal du rouleau tampon rotatif. Ainsi, lors des variations de niveau de la plate-forme du camion, le frottement sur le quai se transforme en une rotation du rouleau tampon rotatif dans un sens ou dans l'autre.

Cependant, ce type de butoir n'est pas pleinement satisfaisant dans la mesure où le matériau amortisseur qui entoure le rouleau rotatif se détériore de façon prématurée au contact du quai. En effet, les efforts de compression auxquels est soumis le rouleau tampon créent des facettes qui s'opposent à son roulement, ou le déchirent. Le rouleau tampon n'est plus en mesure de remplir sa fonction amortissante.

Un second document, brevet EP 1 612 126 A1, décrit un butoir de châssis de véhicule, en particulier de camion, destiné à amortir les chocs lors de l'accostage du camion à un quai. A chaque extrémité de la traverse arrière du châssis du camion est monté le butoir amortisseur. Chaque butoir est formé d'un support, fixé à la traverse arrière du camion, sur lequel est solidarisé un élément amortisseur, tel qu'un bloc de caoutchouc. Un bras de butée porte et guide en rotation, par l'intermédiaire d'un axe porteur horizontal, un rouleau rotatif métallique. Ce bras de butée est monté à pivotement vertical sur le support portant l'élément amortisseur. Ainsi, lors d'un choc entre le camion et le quai, le bras de butée pivote en direction du support et vient en contact avec l'élément amortisseur, qui limite le choc subi. En outre, lors d'une variation de niveau du châssis, par exemple lors du chargement ou déchargement de pièces sur celui-ci, chaque rouleau, en contact avec le quai, effectue une rotation dans un sens ou dans l'autre.

Un tel butoir n'est pas pleinement satisfaisant, dans la mesure où, d'une part le nombre de pièces est important, ce qui engendre un coût élevé, d'autre part il n'est pas adaptable à tout châssis de véhicule, car il fait partie intégrante dudit châssis.

Un autre document, le brevet US 5 004 394, présente un butoir rotatif amortisseur sensiblement similaire à celui décrit dans le document brevet EP 1 612 126. La différence réside essentiellement dans la conception de la partie amortissante de ce butoir. En effet, la fonction amortissante est assurée par un système soit mécanique, du type ressort à lames, soit hydraulique, du type vérin amortisseur.

Ce type de butoir amortisseur rotatif présente à nouveau l'inconvénient d'une conception complexe du butoir, due à un nombre de pièces important engendrant un coût élevé de fabrication et de remplacement d'un tel butoir.

Le brevet FR 2812254 décrit un butoir amortisseur pour véhicule accostant contre un quai comprenant un support rigide pour un rouleau rotatif horizontal en matériau non déformable à l'impact et des moyens d'amortissement élastiques interposés entre le support et la paroi du véhicule sur lequel le butoir est fixé. Ce butoir amortisseur est caractérisé en ce que le support est constitué par un cadre dont l'ouverture contient, sans contact, la partie intermédiaire du rouleau et dont les deux petites ailes forment paliers pour recevoir les extrémités de l'axe, tandis que les moyens d'amortissement élastiques sont constitués par une plaque amortisseuse en matériau déformable élastiquement comportant une alvéole centrale d'accueil de la partie postérieure du rouleau, alvéole dont le fond est espacé du rouleau. A nouveau le nombre de pièces d'un tel butoir est important de même que l'encombrement. Enfin la plage d'amortissement est réduite.

Le brevet FR 2804644 décrit un tampon amortisseur de chocs comprenant un bloc en un matériau élastique présentant une surface arrière de fixation et comprenant :
- au moins un noyau élastique,
- au moins une cage portée par ledit bloc située en avant dudit noyau élastique, cette cage comprenant un logement ouvert vers l'avant et
- au moins un organe tournant installé dans ledit logement de ladite cage et dépassant en avant de la cage et dudit bloc.
A nouveau le nombre d'éléments constitutifs d'un tel butoir est important.

Les brevets FR 2860760 et FR 1038120 appartiennent quant à eux à l'arrière plan technologique de l'invention.

Un but de la présente invention est de fournir un butoir de résistance mécanique élevée et dont le nombre de pièces est réduit sans nuire à la fonction amortisseur dudit butoir.

Un autre but de l'invention est de proposer un butoir dont la conception permet un amortissement progressif, en particulier à raideur progressive, en fonction de l'intensité du choc subi.

A cet effet, l'invention a pour objet un butoir, pour la protection d'un premier élément, tel qu'un véhicule, lors de sa rencontre avec un deuxième élément, tel qu'un quai, avec lequel ledit premier élément est animé d'un déplacement relatif, ledit butoir comprenant au moins une butée de contact tournante montée sur un axe porteur et un support apte à être fixé à l'élément à protéger, dit premier élément, ledit support formant paliers de l'axe porteur de ladite butée, étant un support amortisseur au moins partiellement élastiquement déformable en vue d'amortir les chocs subis par ladite butée de contact tournante lors de sa rencontre avec le deuxième élément, caractérisé en ce que ledit support est formé d'au moins deux joues reliées entre elles par l'axe porteur de la butée de contact tournante, lesdites joues étant réalisées au moins partiellement en un matériau élastiquement déformable, la partie élastiquement déformable de chaque joue comportant au moins un logement formant palier servant à la réception d'une extrémité dudit axe porteur de la butée de contact tournante.

La réalisation de la partie formant paliers d'axe du butoir en un matériau élastiquement déformable permet une simplification du butoir sans nuire à sa résistance mécanique du fait d'une réalisation de la butée de contact tournante, généralement en métal.

De préférence, la partie élastiquement déformable de chaque joue du support présente, notamment lors d'un choc frontal, au moins deux niveaux de résistance à la déformation, l'un, plus faible, correspondant au début de la course de déformation de chaque joue dudit support, l'autre, plus élevé, correspondant à la fin de course de déformation de chaque joue dudit support, pour s'opposer à une déformation trop importante en fin de course, lesdits niveaux étant obtenus par l'intermédiaire d'au moins une zone de moindre résistance de la partie élastiquement déformable de chaque joue dudit support.

Dans un mode de réalisation préféré, la ou au moins une zone de moindre résistance de la partie élastiquement déformable de chaque joue du support est formée par au moins une alvéole ménagée dans la partie élastiquement déformable de chaque joue dudit support.

Il aurait également pu être imaginé de réaliser la partie élastiquement déformable du support en un matériau présentant un gradient de déformation. Cette solution est toutefois plus complexe à mettre en oeuvre.

Dans un mode de réalisation particulier de l'invention, chaque joue se présente sous forme d'un bloc en matériau élastiquement déformable affectant la forme générale d'un triangle isocèle, le logement de réception de l'axe porteur, réalisé sous forme d'un orifice borgne ou traversant s'étendant entre les deux faces du triangle, au voisinage du sommet délimité par les côtés de même longueur du triangle tandis que ladite au moins une alvéole est disposée entre logement et base du triangle.

L'invention sera mieux comprise, et d'autres buts, détails, caractéristiques et avantages de celle-ci apparaîtront plus clairement au cours de la description explicative détaillée qui va suivre d'un mode de réalisation de l'invention donné à titre d'exemple purement illustratif et non limitatif, en référence aux dessins annexés.

Sur ces dessins :
- la figure 1 représente une vue en perspective d'un butoir, conforme à l'invention,
- la figure 2 représente une vue de face du butoir représenté à la figure 1,
- la figure 3 représente une vue partielle en perspective prise de l'arrière du butoir représenté à la figure 1.

Comme mentionné ci-dessus, l'invention concerne un butoir 1, du genre pare-chocs, pour la protection d'un premier élément tel qu'un véhicule lors de sa rencontre avec un deuxième élément, tel qu'un quai, avec lequel ledit premier élément est animé d'un déplacement relatif.

Le butoir 1 est destiné, par exemple, à être fixé à l'arrière du véhicule, ou au quai, selon le choix de l'élément à protéger. Ce butoir 1 est formé d'une butée 2 de contact tournante montée sur un axe 3 porteur et d'un support 4 formant paliers de l'axe 3 porteur de ladite butée 2. De manière caractéristique, à l'invention, le support 4 formant paliers de l'axe 3 porteur est un support amortisseur formé d'au moins deux joues 6 reliées entre elles par l'axe 3 porteur de la butée 2, lesdites joues 6 amortisseuses étant réalisées au moins partiellement en un matériau élastiquement déformable en vue d'amortir les chocs subis par ladite butée 2 de contact tournante lors de sa rencontre avec le deuxième élément. La partie élastiquement déformable de chaque joue 6 comporte au moins un logement 7 formant palier servant à la réception d'une extrémité de l'axe 3 porteur de la butée 2.

Comme mentionné ci-dessus, de préférence le support 4 se déforme de manière non linéaire, en particulier lors d'un choc frontal de la butée 2 de contact tournante avec le deuxième élément. Un choc frontal est généralement caractérisé par un effort exercé de manière orthogonale à la surface de fixation du butoir 1 à l'élément à protéger.

Le support 4, affectant la forme d'un étrier, comporte outre les deux joues 6 au moins partiellement en matière élastiquement déformable, au moins une platine 8, généralement métallique. Lesdites joues 6 sont disposées respectivement aux extrémités transversales de ladite platine 8 servant de liaison desdites joues 6 entre elles. La butée 2 de contact tournante est ainsi positionnée entre les deux joues 6 formant palier de l'axe 3 porteur de ladite butée 2. Il est possible d'envisager, selon un autre mode de réalisation du support 4, que celui-ci soit réalisé en une seule pièce partiellement élastiquement déformable.

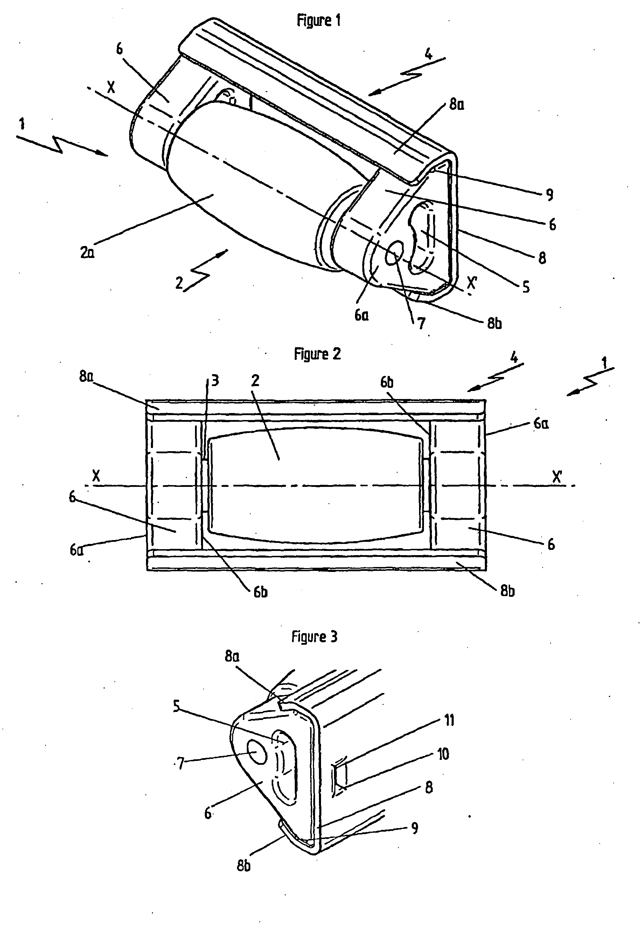

La platine 8 constitue l'interface de fixation du butoir 1 à l'élément à protéger, dit premier élément. La fixation peut être réalisée par exemple par soudage ou par boulonnage sur l'élément à protéger, par exemple sur la traverse arrière d'un véhicule. La platine 8 comporte des bords 8a, 8b longitudinaux relevés formant un logement 9 pour l'insertion des joues 6 dans ladite platine 8. En outre, la platine 8 présente, au voisinage de ses bords transversaux, un crevé 10, illustré à la figure 3, faisant saillie vers l'intérieur de la face de la platine 8 réceptrice des joues 6. Ce crevé 10 est destiné à coopérer avec un logement 11 ménagé dans chaque joue 6 pour le positionnement de cette dernière sur ladite platine 8. Chaque joue 6 est, ainsi, montée à encliquetage sur la platine 8.

Les joues 6, logées dans le logement 9 formé par les bords 8a, 8b longitudinaux de la platine 8, sont réalisées de manière identique. Chaque joue 6 se présente sous la forme d'un bloc en matériau élastiquement déformable, affectant la forme générale d'un triangle isocèle. Disposées, en regard l'une de l'autre, aux extrémités transversales de la platine 8, les joues 6 présentent chacune un logement 7, coaxial l'un à l'autre, formant palier d'une extrémité de l'axe 3 porteur de la butée 2 de contact tournante. Chaque logement 7 de réception d'une extrémité de l'axe 3 porteur est réalisé sous forme d'un orifice, borgne ou traversant, s'étendant entre les deux faces 6a, 6b de la joue. Chaque orifice est disposé au voisinage du sommet 6c délimité par les côtés de même longueur du triangle. Dans le cas d'un orifice borgne formant le logement 7, cet orifice débouche dans la face 6b interne de la joue 6. La au moins une alvéole 5 autorisant une déformation progressive non linéaire de la joue 6 s'étend entre logement 7 et base du triangle.

Les joues 6 sont réalisées au moins partiellement en matériau élastiquement déformable. Ce matériau déformable élastiquement par nature ou par conception est de préférence du type élastomère, le caoutchouc naturel ou synthétique étant considéré comme un élastomère. La partie élastiquement déformable de chaque joue 6 présente au moins deux niveaux de résistance à la déformation, en particulier lors d'un choc frontal, c'est-à-dire selon une direction orthogonale à la face de la platine 8 réceptrice des joues 6. Le niveau de résistance le plus faible, correspond au début de la course de déformation de la joue 6 lorsque la joue se déforme par écrasement de l'alvéole jusqu'à venue en contact des deux bords longitudinaux de l'alvéole s'étendant sensiblement orthogonalement à la direction du choc tandis que le niveau de résistance le plus élevé correspond à la fin de la course de déformation de ladite joue 6 lorsque c'est l'élasticité propre de la joue qui est en jeu et s'oppose à une déformation trop importante de cette dernière. Ces deux niveaux de résistance de chaque joue 6 sont obtenus par l'intermédiaire d'une zone de moindre résistance ménagée dans la joue 6, cette zone étant formée par au moins une alvéole 5 traversante reliant les deux faces 6a, 6b de la joue 6 entre elles. La forme générale en trou oblong partiellement cintré de l'alvéole 5 n'est bien entendu pas limitative. Ces deux niveaux de résistance à la déformation des joues 6 permettent un amortissement plus efficace du choc subi et une durée de vie accrue par rapport à une joue 6 sans alvéole 5. Grâce à cette au moins une alvéole 5, la matière élastiquement déformable de la joue 6 est soumise à moins de contraintes internes lors de chocs de faible intensité, ce qui augmente de façon substantielle la durée de vie du matériau constituant la joue 6.

Il est possible de prévoir davantage de niveaux de résistance de la joue 6. Dans ce cas, il est nécessaire de ménager en série plusieurs alvéoles 5 de différentes dimensions. Il est, en outre, possible de réaliser chaque joue 6 à partir de matières de résistance différente, ou d'une même matière renforcée localement par des matériaux de renfort appropriés.

La butée 2 de contact tournante montée sur l'axe 3 porteur reliant les joues 6 entre elles, affecte la forme d'un rouleau présentant une surface 2a extérieure de révolution bombée sous la forme d'une portion d'arc ou d'ellipse, tel qu'un tonneau. Cette surface 2a est destinée à venir en contact avec le deuxième élément. La butée 2 de contact tournante, réalisée en un matériau métallique, tel qu'un acier, peut être creuse ou pleine.

La butée 2 de contact tournante est montée à rotation autour d'un axe X X', de préférence sensiblement parallèle au sol, passant par l'axe 3 porteur. L'axe 3 porteur permettant à la butée 2 de tourner selon l'axe X X' par rapport au support 4 peut être réalisé de plusieurs manières. Cet axe 3 porteur peut être réalisé sous forme d'un axe continu ou de demi-axes.

Selon un premier mode de réalisation, la butée 2 de contact tournante est solidaire en rotation de son axe 3 porteur. Ainsi, cet axe 3 porteur peut être formé d'une tige traversant de part en part la butée 2 de contact tournante et solidaire en rotation de ladite butée 2. Les extrémités dudit axe 3 sont logées libres à rotation dans le logement 7 formant palier des joues 6.

Selon un deuxième mode de réalisation, la butée 2 de contact tournante est montée libre à rotation sur l'axe 3 porteur dont les extrémités sont disposées dans les logements 7 formant paliers des joues 6.

Le butoir 1 est facilement démontable, dans la mesure où il est constitué d'éléments séparables.

Lorsqu'un véhicule, sur lequel est fixé le butoir 1, vient en contact contre un quai, les joues 6, portant la butée 2 de contact tournante, se compriment en direction de la platine 8, et amortissent le choc avant de revenir à leur forme initiale en l'absence de toute sollicitation de la butée 2 de contact tournante.

Lors des variations de niveau de la plate-forme du véhicule, le frottement sur le quai se transforme en une rotation de la butée 2 de contact tournante dans un sens ou dans l'autre sans arrachement du support 4.

On peut utiliser le butoir 1 sur d'autres type de véhicules, tels que machine agricole, engin de manutention.

En outre, on peut prévoir un ou plusieurs butoirs 1 dans des dispositions diverses par exemple :
- alignés à l'horizontale,
- disposés en plusieurs groupes de deux l'un au-dessus de l'autre.

## Revendications

1. Butoir (1), du genre pare-chocs, pour la protection d'un premier élément, tel qu'un véhicule, lors de sa rencontre avec un deuxième élément, tel qu'un quai, avec lequel ledit premier élément est animé d'un déplacement relatif, ledit butoir (1) comprenant au moins une butée (2) de contact tournante montée sur un axe (3) porteur et un support (4) apte à être fixé à l'élément à protéger, dit premier élément, ledit support (4) formant paliers de l'axe (3) porteur de ladite butée (2), étant un support amortisseur au moins partiellement élastiquement déformable en vue d'amortir les chocs subis par ladite butée (2) de contact tournante lors de sa rencontre avec le deuxième élément,
**caractérisé en ce que** ledit support (4) est formé d'au moins deux joues (6) reliées entre elles par l'axe (3) porteur de la butée (2) de contact tournante, lesdites joues (6) étant réalisées au moins partiellement en un matériau élastiquement déformable, la partie élastiquement déformable de chaque joue (6) comportant au moins un logement (7) formant palier servant à la réception d'une extrémité dudit axe (3) porteur de la butée (2) de contact tournante.

2. Butoir (1) selon la revendication 1,
**caractérisé en ce que** la partie élastiquement déformable de chaque joue (6) du support (4) présente, notamment lors d'un choc frontal, au moins deux niveaux de résistance à la déformation, l'un, plus faible, correspondant au début de la course de déformation de chaque joue (6) dudit support (4), l'autre, plus élevé, correspondant à la fin de course de déformation de chaque joue (6) dudit support (4), pour s'opposer à une déformation de chaque joue (6) trop importante en fin de course, lesdits niveaux étant obtenus par l'intermédiaire d'au moins une zone de moindre résistance de la partie élastiquement déformable de chaque joue (6) dudit support (4).

3. Butoir (1) selon la revendication 2,
**caractérisé en ce que** la ou au moins une zone de moindre résistance de la partie élastiquement déformable de chaque joue (6) du support (4) est formée par au moins une alvéole (5) ménagée dans la partie élastiquement déformable de chaque joue (6) dudit support (4).

4. Butoir (1) selon la revendication 3,
**caractérisé en ce que** chaque joue (6) se présente sous forme d'un bloc en matériau élastiquement déformable affectant la forme générale d'un triangle isocèle, le logement (7) de réception de l'axe (3) porteur, réalisé sous forme d'un orifice borgne ou traversant s'étendant entre les deux faces (6a, 6b) du triangle, au voisinage du sommet (6c) délimité par les côtés de même longueur du triangle, tandis que ladite au moins une alvéole (5) est disposée entre logement (7) et base du triangle.

5. Butoir (1) selon l'une des revendications 1 à 4,
**caractérisé en ce que** le matériau élastiquement déformable de chaque joue (6) est du type élastomère.

6. Butoir (1) selon l'une des revendications 4 et 5,
**caractérisé en ce que** le support (4) comporte en outre une platine (8) de liaison desdites joues (6) entre elles, ladite platine (8) constituant l'interface de fixation du butoir (1) au premier élément à protéger.

7. Butoir (1) selon la revendication 6,
**caractérisé en ce que** les joues (6) sont montées à encliquetage sur ladite platine (8).

8. Butoir (1) selon l'une des revendications 6 et 7,
**caractérisé en ce que** la platine (8) comporte d'une part des bords (8a, 8b) longitudinaux relevés pour former un logement (9) d'insertion des joues (6), d'autre part un crevé (10) faisant saillie vers l'intérieur de la face de la platine (8) réceptrice de la joue (6), ledit crevé (10) coopérant avec un logement (11) ménagé dans ladite joue (6).

9. Butoir (1) selon l'une des revendications 1 à 8,
**caractérisé en ce que** la butée (2) de contact tournante est montée à rotation autour d'un axe (X X') passant par son axe (3) porteur.

10. Butoir (1) selon l'une des revendications 1 à 9,
**caractérisé en ce que** la butée (2) de contact tournante affecte la forme d'un rouleau présentant une surface (2a) extérieure de révolution bombée sous la forme d'une portion d'arc ou d'ellipse.

## Claims

1. Buffer (1), of the bumper type, for protecting a first element, such as a vehicle, when it meets a second element, such as a loading dock, by which said first element is set in motion by a relative movement, said buffer (1) comprising at least one rotating contact stop (2) mounted on a bearing axle (3) and a support (4) capable of being fixed to the element to be protected, known as the first element, said support (4) which forms bearings for the bearing axle (3) of said stop (2) being an at least partially elastically deformable damping support in order to dampen the impacts sustained by said rotating contact stop (2) when it meets the second element,
**characterised in that** said support (4) is formed by at least two flanges (6) connected to one another by the bearing axle (3) of the rotating contact stop (2), said flanges (6) being made at least partially from an elastically deformable material, the elastically deformable part of each flange (6) comprising at least one housing (7) forming a bearing used to receive one end of said bearing axle (3) of the rotating contact stop (2).

2. Buffer (1) according to Claim 1,
**characterised in that** the elastically deformable part of each flange (6) of the support (4) has, in particular during a front impact, at least two levels of resistance to deformation, a first level which is lower, corresponding to the start of the deformation path of each flange (6) of said support (4) and a second level which is higher, corresponding to the end of the deformation path of each flange (6) of said support (4), in order to oppose too great a deformation of each flange (6) at the end of travel, said levels being obtained by means of at least one area of lower resistance to deformation of the elastically deformable part of each flange (6) of said support (4).

3. Buffer (1) according to Claim 2,
**characterised in that** the, or at least one, area of lower resistance to deformation of the elastically deformable part of each flange (6) of the support (4) is formed by at least one cell (5) made in the elastically deformable part of each flange (6) of said support (4).

4. Buffer (1) according to Claim 3,
**characterised in that** each flange (6) is in the form of a block made of elastically deformable material assuming the overall shape of an isosceles triangle, the housing (7) for receiving the bearing axle (3), made in the form of a blind hole or through-hole, extending between the two faces (6a, 6b) of the triangle, in the vicinity of the top (6c) defined by the sides of the triangle which are of the same length, whilst said at least one cell (5) is arranged between the housing (7) and the base of the triangle.

5. Buffer (1) according to one of Claims 1 to 4,
**characterised in that** the elastically deformable material of each flange (6) is of the elastomer type.

6. Buffer (1) according to one of Claims 4 and 5,
**characterised in that** the support (4) further comprises a plate (8) for connecting said flanges (6) to one another, said plate (8) forming the interface for fixing the buffer (1) to the first element to be protected.

7. Buffer (1) according to Claim 6,
**characterised in that t**he flanges (6) are mounted by clipping onto said plate (8).

8. Buffer (1) according to one of Claims 6 and 7,
**characterised in that** the plate (8) comprises, on the one hand, raised longitudinal edges (8a, 8b) to form a housing (9) for inserting the flanges (6) and, on the other hand, a recess (10) projecting towards the interior of the face of the plate (8) for receiving the flange (6), said recess (10) cooperating with a housing (11) made in said flange (6).

9. Buffer (1) according to one of Claims 1 to 8,
**characterised in that** the rotating contact stop (2) is rotatably mounted about an axis (X X') passing through its bearing axis (3).

10. Buffer (1) according to one of Claims 1 to 9,
**characterised in that** the rotating contact stop (2) assumes the shape of a roller having a convex external surface of revolution (2a) in the form of an arc portion or elliptical portion.

## Patentansprüche

1. Puffer (1) in der Art eines Stoßfängers zum Schutz eines ersten Elementes, beispielsweise eines Fahrzeugs, beim Zusammentreffen mit einem zweiten Element, beispielsweise einer Laderampe, gegen das das erste Element in einer Relativbewegung bewegt wird, wobei der Puffer (1) mindestens einen Drehkontaktanschlag (2) umfasst, der an einer Tragachse (3) und einer Halterung (4) angebaut ist, die an dem zu schützenden Element, dem ersten Element, befestigt zu werden geeignet ist, wobei die Halterung (4) Lager der Tragachse (3) des Anschlages (2) bildet, wobei eine dämpfende Halterung mindestens teilweise elastisch verformbar ist, um die von dem Drehkontaktanschlag (2) bei seinem Zusammentreffen mit dem zweiten Element aufgenommenen Stöße zu dämpfen, **dadurch gekennzeichnet, dass** die Halterung (4) von mindestens zwei Wangen (6) gebildet ist, die über die Tragachse (3) des Drehkontaktanschlages (2) miteinander verbunden sind, wobei die Wangen (6) mindestens teilweise aus einem elastisch verformbaren Werkstoff ausgeführt sind, wobei der elastisch verformbare Abschnitt jeder Wange (6) mindestens eine Aufnahme (7) umfasst, die ein Lager bildet, das dazu dient, ein Ende der Tragachse (3) des Drehkontaktanschlages (2) aufzunehmen.

2. Puffer (1) nach Anspruch 1, **dadurch gekennzeichnet, dass** der elastisch verformbare Abschnitt jeder Wange (6) der Halterung (4), insbesondere bei einem Frontalaufprall, mindestens zwei Verformungswiderstandshöhen aufweist, wobei eine, die niedriger ist, dem Anfang des Verformungsweges jeder Wange (6) der Halterung (4) entspricht und die andere, die höher ist, dem Ende des Verformungsweges jeder Wange (6) der Halterung (4) entspricht, um sich einer zu großen Verformung jeder Wange (6) am Ende des Weges zu widersetzen, wobei die Höhen durch mindestens einen einen kleineren Widerstand aufweisenden Bereich des elastisch verformbaren Abschnittes jeder Wange (6) der Halterung (4) ermöglicht sind.

3. Puffer (1) nach Anspruch 2, **dadurch gekennzeichnet, dass** der oder mindestens ein einen kleineren Widerstand aufweisenden Bereich des elastisch verformbaren Abschnittes jeder Wange (6) der Halterung (4) von mindestens einem Hohlraum (5) gebildet ist, der in dem elastisch verformbaren Abschnitt jeder Wange (6) der Halterung (4) angeordnet ist.

4. Puffer (1) nach Anspruch 3, **dadurch gekennzeichnet, dass** jede Wange (6) als Block aus einem elastisch verformbaren Werkstoff vorliegt, der die allgemeine Form eines gleichschenkligen Dreiecks aufweist, wobei die die Tragachse (3) aufnehmende Aufnahme (7), die in Form eines Sackloches oder eines durchgehenden Loches ausgeführt ist, das sich zwischen den beiden Seiten (6a, 6b) des Dreiecks in der Nähe der von den gleich langen Seiten des Dreiecks begrenzten Spitze (6c) erstreckt, während der mindestens eine Hohlraum (5) zwischen der Aufnahme (7) und der Basis des Dreiecks angeordnet ist.

5. Puffer (1) nach einem der Ansprüche 1 bis 4, **dadurch gekennzeichnet, dass** der elastisch verformbare Werkstoff jeder Wange (6) ein Elastomer ist.

6. Puffer (1) nach einem der Ansprüche 4 und 5, **dadurch gekennzeichnet, dass** die Halterung (4) zudem eine Platte (8) zur Verbindung der Wangen (6) miteinander umfasst, wobei die Platte (8) die Schnittstelle für die Befestigung des Puffers
(1) an dem ersten, zu schützenden Element bildet.

7. Puffer (1) nach Anspruch 6, **dadurch gekennzeichnet, dass** die Wangen (6) in die Platte (8) eingerastet werden.

8. Puffer (1) nach einem der Ansprüche 6 und 7, **dadurch gekennzeichnet, dass** die Platte (8) einerseits Längskanten (8a, 8b) umfasst, die ausgebildet ist, um eine Aufnahme (9) zum Einstecken der Wangen (6) zu bilden, und andererseits eine Vertiefung (10) umfasst, die in die Seite der die Wange (6) aufnehmenden Platte (8) hineinragt, wobei die Vertiefung (10) mit einer in der Wange (6) angeordneten Aufnahme (11) zusammenwirkt.

9. Puffer (1) nach einem der Ansprüche 1 bis 8, **dadurch gekennzeichnet, dass** der Drehkontaktanschlag (2) drehbeweglich um eine durch seine Tragachse (3) verlaufende Achse (X X') montiert ist.

10. Puffer (1) nach einem der Ansprüche 1 bis 9, **dadurch gekennzeichnet, dass** der Drehkontaktanschlag (2) die Form einer Rolle mit **einer** bogenabschnitts- oder ellipsenförmig gewölbten Rotationsaußenfläche (2a) aufweist.
